# EUROPÄISCHE PATENTSCHRIFT

(11) **EP 1 524 108 B1**
(45) Veröffentlichungstag und Bekanntmachung des Hinweises auf die Patenterteilung: **26.04.2006**
(21) Anmeldenummer: 03405746.3
(22) Anmeldetag: 17.10.2003
(51) Int. Cl.: B32B 27/32, B32B 1/08, F16L 9/12

(54) **Mehrschichtiges Rohr aus thermoplastischem Kunststoff**
Multilayer thermoplastic pipe
Tube multicouche en thermoplastique

(43) Veröffentlichungstag der Anmeldung: 20.04.2005
(73) Patentinhaber: GEBERIT TECHNIK AG, 8645 Jona (CH)
(72) Erfinder: Watrinet, Hanns, 8733 Eschenbach (CH); Gatter, Raimond, 8730 Uznach (CH)
(74) Vertreter: Groner, Manfred

(56) Entgegenhaltungen:
- WO-A-01/94112

## Beschreibung

Die Erfindung betrifft ein mehrschichtiges Rohr aus thermoplastischem Kunststoff, bestehend aus wenigstens zwei Schichten, die untereinander untrennbar verbunden sind und unterschiedliche Eigenschaften besitzen, wobei eine erste Schicht eine Aussenschicht und eine zweite Schicht eine Innenschicht bildet.

Mit Rohren aus thermoplastischem Kunststoff werden seit langem Rohrleitungen für Wasser und Gas hergestellt und diese konventionell in einem Sandbett eines Rohrgrabens verlegt. Diese Verlegetechnik bedingt einen hohen Aufwand und insbesondere hohe Kosten. Es werden nun seit einiger Zeit zunehmend Rohrleitungen, insbesondere für den Gas-, Wasser- und Kanaleinsatz in offener sandbettfreier Technik verlegt. Es ist auch bekannt, solche Rohre in Erdbohrungen einzuziehen oder einzupressen. Damit können Rohrleitungen unter einer Fahrstrasse vergleichsweise einfach und störungsfrei verlegt werden.

Bei den genannten neuen Verlegetechniken können jedoch am Rohr im Betrieb Punktlasten durch Steine auftreten, da das erwähnte Sandbett fehlt. Bei allen grabenlosen Verlegungs- und Sanierungsverfahren besteht ausserdem ein höheres Beschädigungsrisiko durch Kratzer und Risse sowie durch Punktlast. Das Risiko ist vergleichsweise hoch, da das Ausmass einer Beschädigung am Rohr nicht sofort feststellbar ist. Damit durch Steine hervorgerufene Spannungsspitzen keine Risse in der Rohrwand entstehen, ist es wesentlich, dass das Rohr aus einem Material hergestellt wird, das eine gute spannungsbeständigkeit aufweist. Da bei diesen Verlegungstechniken das Rohr von einer Rolle abgezogen wird, ist es zudem erforderlich, dass das Rohr hinreichend flexibel ist. Ein für die neuen Verlegetechniken besonders geeignetes Rohr sollte deshalb kratz-, punktlast- und rissbeständig und zudem flexibel sein.

Aufschluss über das Spannungsrissverhalten (Slow Crack Grows) eines Rohrwerkstoffes liefern der sogenannte Notch-Test und der FNCT-Test. Beim Notch-Test (ISO 13479) wird ein Rohrstück eingekerbt und anschliessend bei einer bestimmten Prüftemperatur und einem bestimmten Prüfdruck bis zum Bruch geprüft.

Beim Full Notch Creep-Test FNCT (ISO 16770) werden Probestäbchen des zu testenden Werkstoffes scharfkantig eingeschnitten und in einem spannungsrissauslösenden Medium unter konstanter Zugspannung belastet, bis sie brechen.

Ein für die grabenlose Verlegetechnik vorgesehenes dreischichtiges Rohr ist im Stand der Technik aus der WO 01/94112 bekannt geworden. Bei diesem bestehen die Aussenschicht und die Mittelschicht aus unvernetztem Material, insbesondere Polyethylen. Die Aussenschicht besitzt zudem einen zumindest um einen Faktor 3 höheren FNCT-Wert bzw. einen höheren NPT-Wert als die Mittelschicht. Die an die Mittelschicht angrenzende Innenschicht besteht ebenfalls aus unvernetztem Material und besitzt einen zumindest um den Faktor 3 höheren FNCT-Wert bzw. einen zumindest um einen Faktor 2 höheren NPT-Wert als die zweite Schicht. Das Rohr besteht in sämtlichen Schichten aus unvernetztem Material und kann deshalb mit Elektromuffen oder durch Stumpfschweissen verbunden werden. Es soll zudem eine ausserordentlich hohe Haltbarkeit aufweisen, da der Widerstand gegen das Risswachstum bei solchen für die sandbettlose Verlegetechnik vorgesehenen Rohren besonders wichtig ist und die Aussenschicht durch Steine besonders kerbbeansprucht ist. Beim Rohr nach dem oben genannten Dokument soll die dritte Schicht und damit die Innenschicht aufgrund ihres erhöhten FNCT- bzw. NPT-Wertes die bei einer punktbelastenden auftretenden Zugspannungen der Innenschicht frei von Beschädigungen aufnehmen können.

Die EP 0 469 304 A offenbart ein Rohr aus zwei Schichten, wobei die Aussenschicht aus einem vernetzten Polyethylen und die Innenschicht aus einem Polyethylen hoher Dichte (PEHD) besteht. Der Deckschicht ist ein Zuschlagstoff mit Diffusionssperrwirkung beigemischt. Der Zuschlagstoff ist Polyamid oder besteht aus metallischen Mikrolamellen. Die Aussenschicht wird so stark gewählt, dass die in der Praxis zu erwartenden Kerben in keinem Fall tiefer sind als diese Aussenschicht. Die Aussenschicht soll zudem absolut kerbunempfindlich sein und damit keine Gefahr bestehen, dass eine Kerbe an der Aussenschicht des Rohres weiterreisst und zum Einreissen des Innenrohres führt. Ein zweischichtiges Rohr dieser Art ist zudem in der EP 0 604 107 offenbart.

Die WO 84/01988 offenbart ebenfalls ein dreischichtiges Rohr. Bei diesem ist die Mittelschicht aus vernetztem Polyethylen hergestellt.

Der Erfindung liegt die Aufgabe zugrunde, ein Rohr der genannten Art zu schaffen, das sich für die graben- oder sandbettlose Verlegetechnik noch besser eignet.

Die Erfindung ist gemäss Anspruch 1 gelöst.

Das erfindungsgemässe Rohr zeichnet sich durch eine noch höhere Rissbeständigkeit und Flexibilität aus. Die Aussenschicht bildet eine Verschleissschicht, die eine besonders hohe Kratzbeständigkeit aufweistg.

Nach einer Weiterbildung der Erfindung sind sämtliche Schichten aus klassierten Druckrohrwerkstoffen wie PE 80 und/oder PE 100 hergestellt. Vorzugsweise entsprechen die Aussenabmessungen eines solchen Rohres einem Standarddruckrohr aus PE 80 oder PE 100.

Beim erfindungsgemässen Rohr wird vorzugsweise eine Mittelschicht aus Standardrohrmaterial PE 80 oder PE 100 eingesetzt, wenn von der Schichtdicke her die erforderlichen Eigenschaften der Aussen- und Innenschicht erreicht ist. Die Aussenschicht und die Innenschicht verglichen mit der Gesamtwandstärke können dabei vergleichsweise dünn ausgebildet werden. Die Stärke dieser beiden Schichten liegt vorzugsweise im Bereich von jeweils 5 bis 15 % der Gesamtwandstärke. Vorzugsweise beträgt die Stärke der Aussenschicht lediglich 5 bis 15% der Gesamtstärke des Rohres. Bei dieser in der Regel geringen Stärke ist ein Muffenschweissen und Spiegelschweissen auch dann möglich, wenn diese Schicht vernetzt ist. Die Aussenschicht des rohres gemäss der Erfindung ist vernetzt und mit einem Füllstoff modifiziert. Die Vernetzung kompensiert die mechanischen Nachteile des Füllstoffes, sodass ein Rohr erhalten wird, das besonders kratzfest und schweissbar ist, und dennoch die Klassifikation als Druckrohrwerkstoff z.B. PE 80- und/oder PE 100 erreicht.

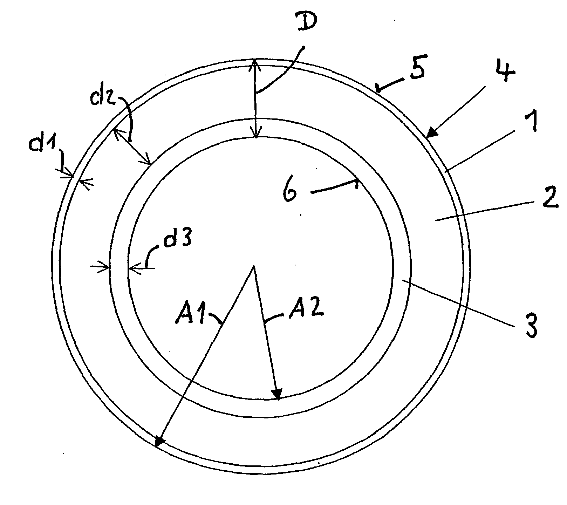

Ein Ausführungsbeispiel der Erfindung wird nachfolgend anhand der einzigen Figur näher erläutert.

Diese Figur zeigt einen Querschnitt durch ein erfindungsgemässes Rohr.

Das in der einzigen Figur gezeigte Rohr 4 besitzt eine erste Schicht 1, eine zweite Schicht 2 und eine dritte Schicht 3 sowie eine Aussenseite 5 und eine Innenseite 6. Das Rohr 4 wird durch Coextrusion so hergestellt, dass die drei Schichten 1 bis 3 durch Verschmelzung untrennbar miteinander verbunden sind. Das Rohr 4 dient insbesondere zur Herstellung von Wasser- oder Gasleitungen und ist für die graben- und sandbettlose Verlegung vorgesehen. Bei einem Rohr mit kleinem Rohrdurchmesser kann die zweite Schicht weggelassen sein.

Sämtliche Schichten 1 bis 3 sind aus dem gleichen Grundmaterial und zwar aus Polyethylen hoher Dichte (PEHD) hergestellt. Dieses Grundmaterial ist insbesondere PE 80 oder PE 100.

Die erste Schicht 1 bildet die Aussenschicht und diese ist vernetzt und enthält einen Füllstoff, der eine besonders hohe Kratzbeständigkeit dieser Schicht 1 ergibt. Der Füllstoff ist ein mineralischer Füllstoff, nähmlich ein Schichtsilikat, das in das Polyethylen eingebettet ist. Um die mechanische Schwächung der Aussenschicht 1 aufgrund des Füllstoffes zu kompensieren, ist der Kunststoff der Aussenschicht 1 vernetzt. Die Festigkeitseigenschaften des Werkstoffes PE 80 oder PE 100 werden hierbei im Wesentlichen beibehalten. Die Stärke d1 dieser Schicht 1 beträgt vorzugsweise 5 bis 15% der Gesamtwandstärke D des Rohres 4. Die Schicht 1 bildet eine Schutzschicht, die besonders kratzfest ist.

Die Schicht 2 bildet die Mittelschicht und besitzt die Eigenschaften von PE 80 oder PE 100. Die Stärke d2 liegt im Bereich von 70 bis 90% der Gesamtwandstärke D.

Die Schicht 3 bildet die Innenschicht, die eine wesentlich höhere Spannungsrissbeständigkeit besitzt als das Grundmaterial und insbesondere als die zweite Schicht 2. Diese dritte Schicht 3 besitzt eine höhere Beständigkeit gegen Spannungsrissbildung. Diese Schicht besteht insbesondere und vorzugsweise aus unvernetztem PE 100 oder höher. Die Stärke d3 dieser dritten Schicht 3 liegt im Bereich von 5 bis 15% der Gesamtwandstärke D.

Die Gesamtwandstärke D ist vorzugsweise gleich wie die der Normstärke eines einschichtigen Rohres aus thermoplastischem Kunststoff. Ebenfalls entsprechen die Aussenabmessungen und somit der Aussendurchmesser Al und der Innendurchmesser A2 einem Standarddruckrohr aus PE 80 oder PE 100. Die wesentlich höhere Beständigkeit gegen Spannungsrissbildung der Innenschicht 3 geht von der Erkenntnis aus, dass bei einer Punktbelastung die Spannung in der Innenschicht 3 grösser ist als in der Aussenschicht 1 und damit diese Innenschicht 3 besonders anfällig auf Rissbildung ist. In Kombination mit der höheren Kratzfestigkeit der Aussenschicht 1 wird ein Rohr 4 geschaffen, das bei gleicher Gesamtwandstärke wie ein Standarddruckrohr deutlich bessere Eigenschaften bezüglich Punktlast- und Kerbempfindlichkeit aufweist.

### Bezugszeichenliste:

- 1.: Aussenschicht
- 2.: Mittelschicht
- 3.: Innenschicht
- 4.: Rohr
- 5.: Aussenseite
- 6.: Innenseite
- Al: Aussendurchmesser
- A2: Innendurchmesser
- D: Gesamtwandstärke
- d1-d3: Schichtdicken

## Patentansprüche

1. Mehrschichtiges Rohr aus thermoplastischem Kunststoff, bestehend aus wenigstens zwei Schichten (1, 3), die untereinander untrennbar verbunden sind und unterschiedliche Eigenschaften besitzen, wobei eine erste Schicht (1) eine Aussenschicht und eine weitere Schicht (3) eine Innenschicht bildet, welche Schichten (1, 3) aus Polyethylen hoher Dichte (PEHD) als Grundmaterial hergestellt sind und dass die Aussenschicht (1) eine um wenigstens 20% höhere Kratzfestigkeit und die Innenschicht (3) eine höhere Spannungsrissbeständigkeit als Standard-Druckrohrmaterial aufweist, wobei die Aussenschicht (1) mit einem Schichtsilikat als mineralischer Füllstoff modifiziert und vernetzt ist.

2. Rohr gemäss Anspruch 1, **dadurch gekennzeichnet, dass** eine dritte Schicht (2) als Mittelschicht zwischen der Aussenschicht (1) und der Innenschicht (3) angeordnet ist und dass diese ebenfalls aus dem genannten Grundmaterial hergestellt ist.

3. Rohr nach Anspruch 1 oder, **dadurch gekennzeichnet, dass** der Aussendurchmesser (A1) demjenigen eines Standard- Druckrohres der entsprechenden Materialklasse aus PE 80 oder PE 100 entspricht und der Innendurchmesser (A2) gleich oder kleiner ist als derjenige dieses Standard- Druckrohres.

4. Rohr nach einem der Ansprüche 1 bis 3, **dadurch gekennzeichnet, dass** die Stärken der Aussenschicht (1) und der Innenschicht (3) im Bereich von jeweils 5% bis 15% der Gesamtwandstärke (D3) liegt.

## Claims

1. Multi-layered pipe made from heat-deformable plastic, comprising at least two layers (1, 3) which are inseparably joined to one another and have different properties, in which a first layer (1) forms an outer layer and another layer (3) forms an inner layer, which layers (1, 3) are made from high-density polyethylene (HDPE) as a base material and the outer layer (1) has a scratch resistance that is 20% higher than that of a standard pressure pipe material and the inner layer (3) has a stress crack resistance that is higher than a standard pressure pipe material, the outer layer (1) being modified with a layered silicate as a mineral filler and being crosslinked.

2. Pipe as claimed in claim 1, **characterised in that** a third layer (2) is provided as a middle layer between the outer layer (1) and the inner layer (3) and it is also made from said base material.

3. Pipe as claimed in claim 1 or 2 **characterised in that** the external diameter (A1) corresponds to that of a standard pressure pipe of the corresponding material class of PE 80 or PE 100 and the internal diameter (A2) is the same as or smaller than that of this standard pressure pipe.

4. Pipe as claimed in one of claims 1 to 3, **characterised in that** the thicknesses of the outer layer (1) and the inner layer (3) are respectively in the range of 5% to 15% of the total wall thickness (D3).

## Revendications

1. Tube multicouche formé d'une matière thermoplastique, constitué par au moins deux couches (1, 3), qui sont reliées entre elles de façon inséparable et possèdent des caractéristiques différentes, une première couche (1) formant une couche extérieure et une autre couche (3) formant une couche intérieure, lesquelles couches (1, 3) sont réalisées en polyéthylène haute densité (PEHD) comme matériau de base, et dans lequel la couche extérieure (1) possède une résistance à la rayure supérieure d'au moins 20 % et la couche intérieure (3) possède une résistance aux criques de tension supérieure à celles du matériau d'un tube de pression standard, la couche extérieure (1) étant modifiée et réticulée avec du silicate sous forme de couche en tant que substance de remplissage minérale.

2. Tube selon la revendication 1, **caractérisé en ce qu'**une troisième couche (2) est disposée en tant que couche médiane entre la couche extérieure (1) et la couche extérieure (3) et que cette couche est réalisée également avec le matériau de base indiqué.

3. Tube selon la revendication 1 ou 2, **caractérisé en ce que** le diamètre extérieur (A1) correspond à celui d'un tube de pression standard de la classe de matériaux correspondante comprenant le PE 80 ou le PE 100 et **en ce que** le diamètre intérieur (A2) est égal ou inférieur à celui de ce tube de pression standard.

4. Tube selon l'une des revendications 1 à 3, **caractérisé en ce que** les épaisseurs de la couche extérieure (1) et de la couche intérieure (3) se situent dans la gamme de respectivement 5 % à 15 % de l'épaisseur totale de paroi (D3).
